# EUROPEAN PATENT SPECIFICATION

(11) **EP 1 364 485 B1**
(45) Date of publication and mention of the grant of the patent: **06.08.2008**
(21) Application number: 02715614.0
(22) Date of filing: 18.01.2002
(51) Int. Cl.: H04L 12/00

(54) **APPARATUS, AND AN ASSOCIATED METHOD, FOR PROVIDING WLAN SERVICE IN A FIXED WIRELESS ACCESS COMMUNICATION SYSTEM**
APPARAT UND ZUGEORDNETES VERFAHREN ZUM ERBRINGEN EINES WLAN DIENSTES IN EINEM STATIONÄREN, DRAHTLOSEN ZUGANGSKOMMUNIKATIONSSYSTEM
APPAREIL ET PROCEDE ASSOCIE PERMETTANT DE FOURNIR UN SERVICE DE RL SANS FIL DANS UN SYSTEME DE COMMUNICATION A ACCES SANS FIL FIXE

(30) Priority: 19.01.2001 US 262708 P; 20.04.2001 US 839499
(43) Date of publication of application: 26.11.2003
(73) Proprietor: Raze Technologies, Inc., Plano, TX 75074 (US)
(72) Inventor: STRUHSAKER, Paul, F., Plano, TX 75023 (US)
(74) Representative: Howick, Nicholas Keith
(86) International application number: PCT/IB2002/000140
(87) International publication number: WO 2002/058324

(56) References cited:
- EP-A- 0 690 637
- EP-A- 0 690 638
- WO-A-99/09762
- WO-A-99/29126
- US-A- 5 475 735

## Description

The present invention claims priority to United States Provisional Application No. 60/262,708 filed January 19, 2001.

### TECHNICAL FIELD OF THE INVENTION

The present invention relates generally to a manner by which to provide mobile communications in a fixed wireless access (FWA) communication system. More particularly, the present invention relates to apparatus, and an associated method, for providing WLAN (wireless local area network) service at a subscriber station of the fixed wireless access communication system. Mobile stations operation in the WLAN are thereby able to communicate in the WLAN coverage area encompassing the subscriber station. When WLAN service is provided to a plurality of fixed-site subscriber stations, cellular coverage areas are formed, between which handovers of communications are permitted all by way of the fixed wireless access communication system

### BACKGROUND OF THE INVENTION

Advancements in communication technologies have permitted the development, and implementation, of new types of communication systems. Such communication systems are able to permit the communication of increased amounts of data at increased thruput rates relative to conventional communication systems. And, such new communication systems have permitted communication of information at, and between, communication stations positioned at locations from which communications have conventionally been inconvenient or impractical.

Radio communication systems, for instance, are exemplarily of communication systems of which new types, and improvements to existing types, have been made possible as a result of advancements in communication technologies.

Similar to other types of communication systems, in a radio communication system, information is communicated between a sending station and a receiving station by way of a communication channel. In a radio communication system, unlike other types of communication systems, a communication channel formed between the sending and the receiving stations and upon which information is communicated by the sending station to the receiving station, is formed of a portion of the electromagnetic spectrum. Radio links are defined upon the portion of the electromagnetic spectrum allocated to the radio communication system.

Because a radio link is utilized upon which to form communication channels, a fixed, or wireline, connection is not required to be formed between the sending and receiving stations to form a communication channel. Information can be communicated between the sending and receiving stations at, and between, locations at which conventional wireline communications would not be permitted. Additionally, the infrastructure costs associated with the installation of a radio communication system are also generally lower than the corresponding costs which would be required to install a conventional, wireline communication system. And, as the advancements in communication technologies have permitted the bandwidth allocated to a radio communication system to be utilized more efficiently, a radio communication can increasingly be utilized effectuate a communication service which require relatively significant data thruput capability.

A wireless broadband communication system has been proposed, for instance, by which to permit the effectuation of any of various communication services by way of radio links with fixed-site subscriber stations. Radio links are formed with the subscriber stations by fixed-site base stations. The base stations are installed at spaced-apart locations throughout the geographical area which is to be encompassed by the wireless broadband communication system. Several subscriber stations are capable of communicating with a single base station.

Communication of data is effectuated between the subscriber stations and an associated base station by way of radio links upon which communication channels are defined. Because radio links are utilized between the subscriber stations and the base stations, the infrastructure costs associated with the formation of wireline connections between the subscriber stations are obviated. Broadband communications, and communication services which require the communication of broadband data, as well as communication services necessitating smaller data thruput rates are effectuable through use of the wireless broadband communication system.

Advancements in communication technologies have also permitted the development, and introduction, of other types of radio communication systems. Wireless communication systems, sometimes referred to as micro-cellular networks, private networks, and WLANs (wireless local area networks) are exemplary of such systems. Such networks, generally, provide for radio communications with mobile stations positioned within communication range of such networks.

Generally, the communication ranges of the mobile stations operable in such systems is relatively small as relatively low-power signals are originated at the mobile stations and, correspondingly, originated at the network infrastructure of such systems to be terminated at the mobile stations. The network infrastructure of such systems typically include fixed-location transceivers, sometimes referred to as access points. The access points are capable of communicating with a group of mobile stations positioned within a micro-cellular, or other, area defined by the access point. In some of such systems, the access points are coupled to a conventional, local area network, also used to interconnect the processing stations of an office computer system. In other such systems, the access points are connected in other manners.

Installation of a wireless broadband communication system to provide broadband services with a plurality of subscriber stations provides a radio infrastructure throughout a geographical area throughout which wireless broadband communication services are effectuable. If a manner could be provided by which to utilize the communication capabilities of a wireless broadband communication system to provide additional communication services, additional benefits of a wireless broadband communication system would be provided.

It is in light of this background information related to radio communication systems that the significant improvements of the present invention have evolved.

EP 0690638 discloses a system as set out in claim 1 with the exception that it does not provide handing off, by the first local-network radio transceiver, to the second local-network radio transceiver at the second large-area network fixed site subscriber station when the mobile station moves outside the selected range of the first large-area network fixed-site subscriber station, but within the selected range of the second large-area network fixed-site subscriber station.

### SUMMARY OF THE INVENTION

The present invention, accordingly, advantageously provides apparatus, and an associated method, by which to provide mobile communications in a fixed wireless access (FWA) communication system.

Through operation of an embodiment of the present invention, WLAN (wireless local area network) service is provided to a subscriber station of the fixed wireless access communication system. Mobile stations within communication range of the subscriber station, and operable in the WLAN, are able to communicate by way of the WLAN. By providing WLAN service to a plurality of subscriber stations and thereafter providing integrated control over WLAN communications, handover of communications with a mobile station is provided as the mobile station travels between coverage areas formed at separate ones of the subscriber stations.

In one aspect of the present invention, a WLAN transceiver, such as an access point, is installed at a subscriber station of a fixed wireless access communication system. A WLAN transceiver provides localized radio communications throughout a coverage area defined by the communication range of the WLAN transceiver and mobile stations with which WLAN transceiver communications. More than one WLAN transceiver is positionable at the subscriber station, as appropriate. Radio communications between a mobile station and the WLAN transceiver provide for two-way communications with the mobile station.

In another aspect of the present invention, the WLAN transceiver positioned at the subscriber station is, in turn, coupled by way of a radio link with a base station of the fixed wireless access communication system. Information originated at a mobile station is communicated by way of a local radio link to the WLAN transceiver. The WLAN transceiver, in turn, is coupled to a transceiver station, such as an IAD (integrated access device), located at the subscriber station and operable in the fixed wireless access communication system. The integrated access device, or other subscriber-station transceiver, in turn, communicates the information originated at the mobile station to the base station of the fixed wireless access system. Thereafter, the information is forwarded, as appropriate, to a destination. Analogously, information originated at, or provided to, a base station operable in the fixed wireless access communication system and which is to be terminated at the mobile station is communicated by the base station to the integrated access device, or other subscriber-station transceiver. Subsequent to reception thereat, the information is forwarded to the WLAN transceiver to be transmitted therefrom by way of the local radio link through the mobile station. Thereby, communication is effectuable between mobile station and the base station of the fixed wireless access communication system.

In another aspect of the present invention, the WLAN transceivers are installed at a plurality of subscriber stations such that the coverage areas of the separately-installed transceivers at least partially overlap. Integrated control over operation of the WLAN transceivers is provided at the network of the fixed wireless access communication system. Mobile stations which travel between coverage areas defined by different ones of the WLAN transceivers are permitted continued communication by way of local radio links by handing over communications between WLAN transceivers. Ongoing communication sessions with the mobile station continue in spite of handover of communications between the WLAN transceivers.

In another aspect of the present invention, a routing map is maintained at a location coupled to, or integrated within, the fixed wireless access communication system. The routing map maintains a listing of the location of mobile stations operable to communicate by way of local radio links with WLAN transceivers positioned at different ones of the subscriber stations of the fixed wireless access communication system. The locations at which the mobile stations are positioned are updated, as needed, as a mobile station travels between coverage areas defined by different ones of the WLAN transceivers. When information is to be communicated to a particular mobile station, the routing map is accessed to retrieve indications of the location at which the mobile station at which the information is to be terminated is positioned. Through use of the indications retrieved from the routing map, the information which is to be communicated to the mobile station is able to be most-efficiently routed to the mobile station.

In another aspect of the present invention, when a handover of communications is effectuated, the routing map is updated, and information routed to the mobile by way of a WLAN transceiver from which a handover of communication is effectuated, but not yet delivered to the mobile station, is retrieved and then re-routed to the mobile station by way of the mobile station to which communications have been handed over.

In these and other aspects, therefor, apparatus, and an associated method, is provided for a fixed wireless access communication system. The fixed wireless access communication system has at least a first fixed-site base station and at least a first fixed-site subscriber station capable of communicating with the first fixed-site base station. Radio communication with a mobile station is facilitated. A first local-network radio transceiver is positioned at the at least first fixed-site subscriber station. The first local-network radio transceiver selectably transceives communication signals with the mobile station upon a first local radio link formed between the first local-network radio transceiver and the mobile station when the mobile station is positioned within a selected range of the first fixed-site subscriber station.

A more complete appreciation of the present invention and to the scope thereof can be obtained from the accompanying drawings which are briefly summarized below, the following detailed description of the presently-preferred embodiments of the invention, and the appended claims.

### BRIEF DESCRIPTION OF THE DRAWINGS

Figure 1 illustrates a functional block diagram of a fixed wireless access (FWA) communication system in which an embodiment of the present invention is operable.
Figure 2 illustrates a representation of a fixed wireless access communication system similar to that shown in Figure 1 here also illustrating a plurality of cellular coverage areas defined by about a plurality of subscriber stations of the fixed wireless access communication system.
Figure 3 illustrates another representation of the fixed wireless access communication system shown in Figures 1 and 2.
Figure 4 illustrates a method flow diagram listing the method of operation of the method of an embodiment of the present invention.

### DETAILED DESCRIPTION OF THE INVENTION

A fixed wireless access (FWA) communication system 10 provides for radio communications between fixed-site base stations, of which the base station 12 is exemplary and fixed-site subscriber stations 14 of which the subscriber station 14 is exemplary. A radio link 16 upon which forward link channels 18 and reverse link channels 22 is of a bandwidth permitting broadband communication services to be effectuated with devices located at the subscriber station 14.

In the exemplary implementation, an integrated access device (IAD) 24 forms a transceiver located at the subscriber station and at which forward link signals transmitted upon the forward link channels of the radio link are detectable and which generate reverse link signals for transmission upon the reverse link channels of the radio link. A separate IAD 24 is located at each subscriber station of the communication system.

In the exemplary implementation, each base transceiver station includes a remote modem (modulator-demodulator) capable of communicating with seven separate subscriber stations located within a radial sector. In other implementations, the circuitry of the base transceiver station is configured in other manners.

The base station 12, and the set of remote modems thereof, is coupled to an access process 28 which is operable, amongst other things, to perform control operations to control operation of the communication system. The access process 28 is, in turn, coupled to a communication network 32 such as a public-switched telephonic network or a packet data network. And, a correspondent node 34 is coupled to the communication network. A communication path is formable between the correspondent node and the IAD 24 positioned at the subscriber station by way of the communication network, the access process 28, the base station 12, and the radio link 16. Communication of information by the correspondent node to the integrated access device and from the integrated access device to the correspondent node is effectuable by way of the communication path.

Pursuant to an embodiment of the present invention, a WLAN (wireless local area network) transceiver 38 is positioned at the subscriber station 14 at the integrated access device 24 to be connected to the transceiver circuitry of the integrated access device. The WLAN transceiver defines a coverage area 42 defining a cell. A mobile station 44 positioned within the cell 42 is capable of communicating with the transceiver 38. That is to say, the radio link 46 is formable between the transceiver 38 and the mobile station 44 upon which forward and reverse link signals are communicated therebetween. Signals originated at the mobile station are communicated upon reverse link channels of the radio link 46 to the WLAN transceiver 38. And, communication signals to be terminated at the mobile station 44 are communicated upon forward link channels of the radio link 46.

Because of the connection of the WLAN transceiver to the transceiver of the integrated access device 24, signals originated at the mobile station and communicated to the WLAN transceiver can, in turn, be provided to the transceiver of the integrated access device to be communicated upon reverse link channels of the radio link 16 and, thereafter, be communicated to another device, such as the correspondent node 34. Analogously, signals originated at the correspondent node, or elsewhere, can be communicated to the mobile station by way of forward link channels of the radio links 16 and 46 to the mobile station. Thereby communications are effectuable with a mobile station in the fixed wireless access communication system.

In the exemplary implementation, the integrated access device 24 forms a rack-assembly having expansion slots to receive expansion cards thereat. And, the WLAN transceiver is mounted upon, or is otherwise formed at, an expansion card connectable to the expansion slot of the rack-assembly. Thereby the integrated access device together with the WLAN transceiver form an integrated device providing for two-way communication upon the radio link 16 as well as two-way communication upon the radio link 46.

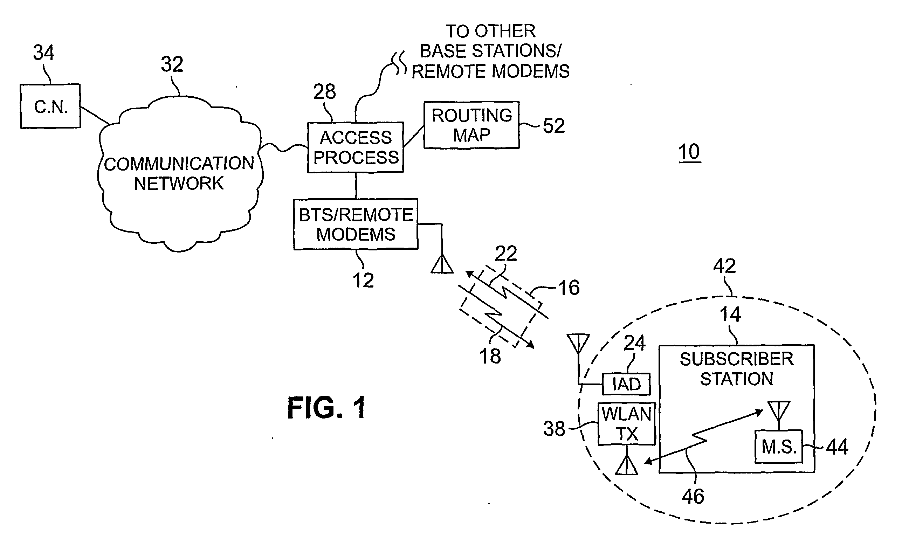

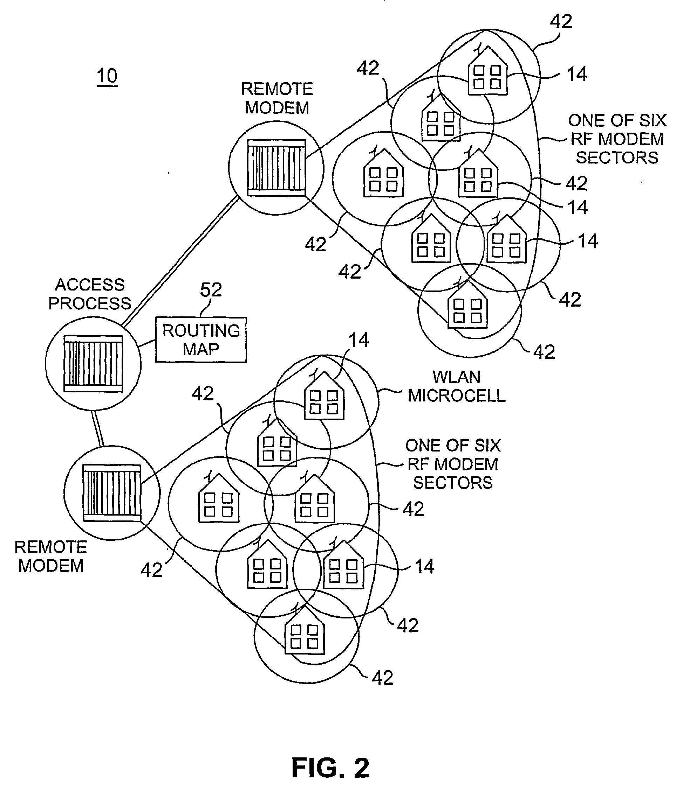

Figure 2 illustrates another view of the communication system 10, here illustrating an implementation in which a plurality of subscriber stations 14 include WLAN transceivers 38 (shown in Figure 1) connected to corresponding integrated access devices 24 (also shown in Figure 1). The coverage areas 42 defined by respective ones of the WLAN transceivers are shown in the figure. Adjacent ones of the coverage areas over lap with one another. The remote modes of the base transceivers are again shown in the Figure as is the access process. An arrangement in which the remote modems communicate with subscriber stations positioned within a radio sector is shown in the figure. In other implementations, other arrangements are utilized.

A mobile station initially positioned within, or approximate to, a coverage area 42 defined by a WLAN transceiver positioned at a first subscriber station is permitted movement, such as out of the coverage area defined by the transceiver positioned at a first subscriber station and into the coverage area defined by a WLAN transceiver of another subscriber station. Through operation of an embodiment of the present invention, a handover of communications is effectuated from the first WLAN transceiver to another WLAN transceiver, thereby to permit continued communications with the mobile station.

Determination of when to initiate handover of communications is made responsive to measurements of signal characteristics of communication signals communicated between the WLAN transceiver and the mobile station. In one implementation signal characteristics are measured, or otherwise determined, at the mobile station and results of such measures or determinations of are reported back to the WLAN transceiver and appropriate control circuitry. Thereafter, if appropriate, the handover of communications is effectuated.

A routing map 52 is further shown in the figure. The routing map is functionally connected to the access process 28. The routing map includes a listing of the mobile stations, such as the mobile station 46 operable to transceive communication signals pursuant to the WLAN service. Indexed together with the listing the mobile stations are the locations at which the mobile stations are positioned. When communications are to be effectuated with a particular mobile station, such as communications originated by the correspondent node 34, the routing map is accessed and the communication signals are routed to the mobile stations at the position indicated in the routing map. And, when a handover is effectuated, information routed to a mobile station but not yet delivered is rerouted to the WLAN transceiver to which communications have been handed over.

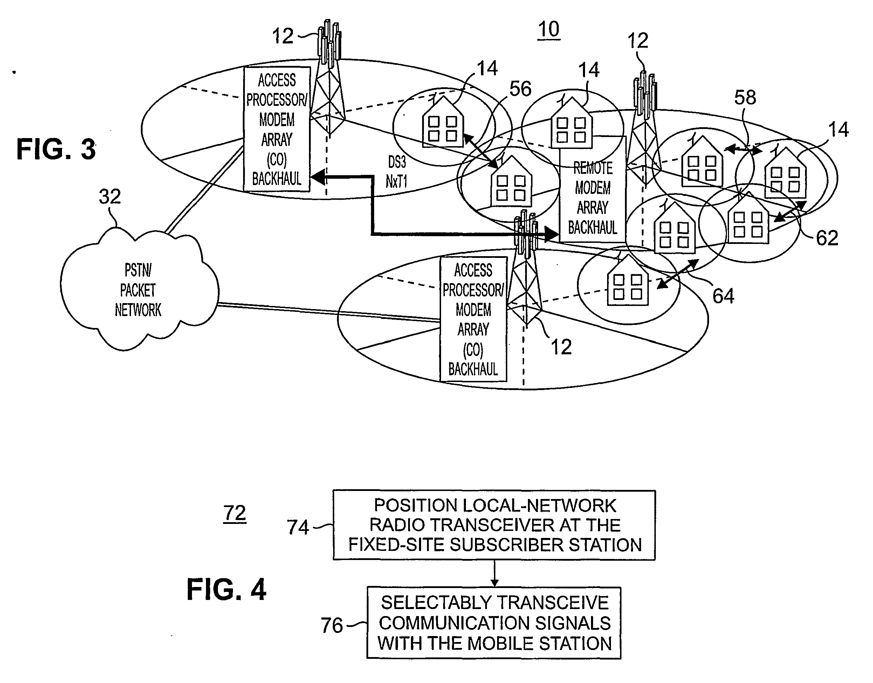

Figure 3 again illustrates the communication system 10, here showing a plurality of base stations 12 and subscriber stations 14 associated with various ones of the base stations. Each of the subscriber stations includes a WLAN transceiver (shown in Figure 1) various of the base transceiver stations are here shown also to be coupled by way of the communication network 32, again either a PSTN, a packet data network, or a combination of such networks. Movement of a mobile station between the coverage areas is defined by different ones of the subscriber stations are shown in the figure. For instance, movement of a mobile station indicated by the arrow 56 represents movement of the mobile station between subscriber stations associated with separate cells of separate base stations. Such movement results in access process routing of subsequent communication signals to a new cell of the fixed wireless access communication system, access process routing to a separate remote mode sector, and remote modem routing to a new subscriber integrated access device. The arrow 58 is representative of movement of a mobile station within a single sector of a single base station. Here, the result is a subscriber integrated access device to a remote modem routing change.

The arrow 62 is representative of movement of a mobile station between adjacent sectors defined by a single base station. Such movement results in access process routing of the communication signal to the new remote modem sector transceiver. And, the arrow 64 is representative of movement of a mobile station between sectors of different cells defined by two different base stations. Such movement results in access process to access process routing resolution, access processing routing to the new cell, access process routing to the new remote modem sector, and remote modem routing to the new subscriber access integrated device. Thereby, handovers of communications are effectuable through any movement of a mobile station between coverage areas defined by WLAN transceivers forming a portion of a fixed wireless access communication system.

Figure 4 illustrates a method, shown generally at 72 of an embodiment of the present invention. The method facilitates radio communications with the mobile station in a fixed wireless access communication system having at least a first base station and at least a first subscriber station capable of communicating with the base station. First, and as indicated by the block 74, a local-network radio transceiver is positioned at the fixed-site subscriber station. Then, and as indicated by the block 76, communication signals are selectably transceived with the mobile station upon a first local radio link between the local-network radio transceiver and a mobile station when the mobile station is positioned within a coverage area defined by the local-network radio transceiver.

Through operation of the method of an embodiment of the present invention, WLAN service is provided in a fixed wireless access in a communication system. A mobile station operable in a wireless local area network is thereby able to communicate in the WLAN coverage area encompassing the subscriber station at which the local-network radio transceiver is positioned.

The previous descriptions are of preferred examples for implementing the invention, and the scope of the invention should not necessarily be limited by this description. The scope of the present invention is defined by the following claims.

## Claims

1. A system (10) for facilitating radio communication with a mobile station (44) in a fixed wireless access communication system having at least a first large-area network fixed-site base station (12) and at least first and second large-area network fixed-site subscriber stations (14) each capable of communicating with the first large-area network fixed-site base station, the system comprising:
first and second local-network radio transceiver means (38) positioned at each of the at least first and second large-area network fixed-site subscriber stations, respectively, for selectably transceiving communication signals for communications between the first large-area network fixed-site base station and the mobile station upon a local radio link (46) formed between the respective local-network radio transceiver means and the mobile station,
wherein the first local-network radio transceiver means at the first large-area network fixed site subscriber station is adapted to form the local radio link with the mobile station when the mobile station is positioned within a selected range of the first large-area network fixed-site subscriber station and is adapted to hand off to the second local-network radio transceiver means at the second large-area network fixed site subscriber station when the mobile station moves outside the selected range of the first large-area network fixed-site subscriber station but within the selected range of the second large-area network fixed-site subscriber station, and
wherein the first local-network radio transceiver means is adapted to form the local radio link with the mobile station when the mobile station is positioned within the selected range of the first large-area network fixed-site subscriber station but outside the selected range of the second large-area network fixed-site subscriber station, the second local-network radio means is adapted to form a local radio link with the mobile station when the mobile station is positioned within the selected range of the second large-area network fixed-site subscriber station but outside the selected range of the first large-area network fixed-site subscriber station, and a selected one of the first and second local-network radio transceiver means is adapted to form a local radio link with the mobile station when the mobile station is positioned within the selected range of both the first and second large-area network fixed-site subscriber station.

2. The system (10) of Claim 1 wherein the first large-area network fixed-site subscriber station includes first large-area network transceiver means (28) positioned thereat and the second large-area network fixed-site subscriber station includes second large-area network transceiver means (28) positioned thereat, each of the first and second large-area network transceiver means for transceiving communication signals upon a large-area radio link (16) with the fixed-site base station and wherein each local-network radio transceiver means is coupled to the large-area-network transceiver means at the respective first or second fixed-site subscriber station such that communication signals generated at the first large-area network fixed-site base station, communicated upon the large-area radio link and received at the first large-area network transceiver means, are routed to the first local-area network transceiver means to be communicated to the mobile station upon the local radio link.

3. The system of Claim 2 wherein communication signals generated at the mobile station and communicated upon the local radio link to the first local-network radio transceiver means are routed to the first large-area network transceiver means to be communicated upon the large-area radio link to the large-area network fixed-sited base station.

4. The system of Claim 2 wherein each large-area-network transceiver means comprises a rack assembly having at least one expansion slot at which card-mounted circuitry is connectable, thereafter to form a portion of the rack assembly, and wherein each local-network radio transceiver means comprises a local area network card connectable to the expansion slot.

5. The system of Claim 1 wherein the first and second local-network radio transceiver means further comprisemeans selectably transceiving communication signals with the mobile station upon a first local radio link and
means selectably transceiving communication signals with the mobile station upon a second local radio link.

6. The system of Claim 5 wherein a region (42) within the selected range of the first local-network radio transceiver means defines a first cellular area within which the mobile station is capable of transceiving the communication signals with the first local-network radio transceiver means and wherein a region within the selected range of the second local-network radio transceiver means defines a second cellular area (42) within which the mobile station is capable of transceiving the communication signals with the second local-network radio transceiver means.

7. The system of Claim 6 wherein the first cellular area and the second cellular area at least partially overlap and wherein selection of communication between the mobile station and one of the first and second local-network radio transceiver means is based upon at least one communication parameter.

8. The system of Claim 7 wherein the at least one communication parameter comprises a signal quality parameter.

9. The system of Claim 7 wherein the at least one communication parameter comprises a system load-related parameter.

10. The system of Claim 6 wherein the mobile station is permitted movement at least between the first cellular area and the second cellular area and wherein communication hand-offs are performed between the first local-network radio transceiver means and said second local-network radio transceiver means responsive to movement of the mobile station between the first cellular area and the second cellular area.

11. The system of claim 10, wherein the fixed wireless access communication system further comprises a routing map (52) coupled to the first large-area network fixed-site base station, the routing map containing an indication of the position of the mobile station in the first cellular area, the second cellular area, or both.

12. The system of Claim 11 wherein the first large-area network fixed-site base station is connected to an access processor (28) and wherein the routing map is located at the access processor.

13. The system of Claim 12 wherein the indication of the position of the mobile station is updated responsive to changes in location of the mobile station.

14. The system of Claim 12 wherein routing of communication signals to the mobile station is selected responsive to values of the indication contained thereat.

15. The system of Claim 14 wherein, subsequent to updating of the value of the indication contained thereat, and responsive to hand-off of communications between the first local-network radio transceiver means and the second local-network radio transceiver means, undelivered communication signals are rerouted according to updated value of the indication.

16. A method for communicating in a fixed wireless access (FWA) communication system (10) having a large-area network fixed-site base station (12), a first large-area network fixed-site subscriber station (14) capable of communicating with the large-area network fixed-site base station, a second large-area network fixed-site subscriber station (14) capable of communicating with the large-area network fixed-site base station, and a mobile station (14) and wherein the mobile station moves between coverage areas defined by a selected range of the first local-network radio transceiver and by a selected range of the second local-network radio transceiver, said method comprising:
selectably transceiving communication signals for communications between the large-area network fixed-site base station and the mobile station using a first radio (46) link formed between the mobile station and a first local-network radio transceiver positioned at the first large-area network fixed-site subscriber station when the mobile station is positioned within the selected range of the first large-area network fixed-site subscriber station but outside the selected range of the second large-area network fixed-site subscriber station;
selectably transceiving communication signals for communications between the large-area network fixed-site base station and the mobile station using a second radio link (46) formed between the mobile station and a second local-network radio transceiver positioned at the second large-area network fixed-site subscriber station when the mobile station ie positioned within the selected range of the second large-area network fixed-site subscriber station but outside the selected range of the first large-area network fixed-site subscriber station;
selectably transceiving communication signals between the large-area network fixed-site base station and the mobile station using a selected one of the first and second radio links (46) when the mobile station is positioned within the selected ranges of both the first and second large-area network fixed-site subscriber stations;
selectably transceiving communication signals between the large-area network fixed-site base station and the mobile station using the second radio link (46) when the mobile station moves outside the selected range of the first large-area network fixed-site subscriber station but within the selected range of the second large-area network fixed-site subscriber station; and
handing-off communications with the mobile station between the first local-network radio transceiver and the second local-network radio transceiver when the mobile station moves between the coverage areas.

17. The method of Claim 16 wherein the first and second fixed-site subscriber stations each include a large-area-network radio transceiver (38) positioned thereat for transceiving communication signals upon a large-area radio link (16) with the large-area network fixed-site base station, wherein the first and second local-network radio transceivers are each coupled to the large-area network radio transceiver positioned at the respective first or second large-area network fixed-site subscriber station such that communication signals generated at the large-area network fixed-site base station, communicated upon the large-area radio link and received at the first large-area network radio transceiver, are routed to the first local-area network radio transceiver to be communicated to the mobile station upon the first local radio link.

18. The method of Claim 16, further comprising:
maintaining a routing map (62) indicating in which coverage area the mobile station is positioned.

## Patentansprüche

1. System (10) zur Unterstützung der Funkkommunikation mit einer Mobilstation (44) in einem stationären drahtlosen Zugangskommunikationssystem mit zumindest einer ersten Großnetzbasisstation (12) mit festem Standort und zumindest ersten und zweiten Großnetzteilnehmerstationen (14) mit festem Standort, von denen jede fähig ist, mit der ersten Großnetzbasisstation mit festem Standort zu kommunizieren, wobei das System umfasst:
erste und zweite lokale Funknetztransceivermittel (38), die jeweils an jeder der ersten und zweiten Großnetzteilnehmerstationen mit festem Standort positioniert sind, um auswählbar Kommunikationssignale für Kommunikationen zwischen der ersten Großnetzbasisstation mit festem Standort und der Mobilstation auf einer lokalen Funkverbindung (46), die zwischen dem jeweiligen lokalen Funknetztransceivermittel und der Mobilstation aufgebaut wird, zu senden bzw. zu empfangen,
wobei das erste lokale Funknetztransceivermittel an der ersten Großnetzteilnehmerstation mit festem Standort geeignet ist, die erste lokale Funkverbindung mit der Mobilstation aufzubauen, wenn die Mobilstation innerhalb einer ausgewählten Reichweite der ersten Großnetzteilnehmerstation mit festem Standort positioniert ist, und geeignet ist, an das zweite lokale Funknetztransceivermittel an der zweiten Großnetzteilnehmerstation mit festem Standort weiterzureichen (Handoff), wenn sich die Mobilstation außerhalb der ausgewählten Reichweite der ersten Großnetzteilnehmerstation mit festem Standort, aber innerhalb der ausgewählten Reichweite der zweiten Großnetzteilnehmerstation mit festem Standort bewegt, und
wobei das erste lokale Funknetztransceivermittel geeignet ist, die lokale Funkverbindung mit der Mobilstation aufzubauen, wenn die Mobilstation innerhalb des ausgewählten Bereichs der ersten Großnetzteilnehmerstation mit festem Standort, aber außerhalb der ausgewählten Reichweite der zweiten Großnetzteilnehmerstation mit festem Standort positioniert ist, wobei das zweite lokale Funkmittel geeignet ist, eine lokale Funkverbindung mit der Mobilstation aufzubauen, wenn die Mobilstation innerhalb der ausgewählten Reichweite der zweiten Großnetzteilnehmerstation mit festem Standort, aber außerhalb der ausgewählten Reichweite der ersten Großnetzteilnehmerstation mit festem Standort positioniert ist, und ein ausgewähltes der ersten und zweiten lokalen Funknetztransceivermittel geeignet ist, eine lokale Funkverbindung mit der Mobilstation aufzubauen, wenn die Mobilstation innerhalb der ausgewählten Reichweite sowohl der ersten als auch der zweiten Großnetzteilnehmerstation mit festem Standort positioniert ist.

2. System (10) nach Anspruch 1, wobei die erste Großnetzteilnehmerstation mit festem Standort erste Großnetztransceivermittel (28) umfasst, die daselbst positioniert sind, und wobei die zweite Großnetzteilnehmerstation mit festem Standort zweite Großnetztransceivermittel (28) umfasst, die daselbst positioniert sind, wobei jedes der ersten und zweiten Großnetztransceivermittel zum Senden bzw. Empfangen von Kommunikationssignalen auf einer Großnetzfunkverbindung (16) mit der Basisstation mit festem Standort dient und wobei jedes lokale Funknetztransceivermittel mit dem Großnetztransceivermittel an der jeweiligen ersten oder zweiten Teilnehmerstation mit festem Standort gekoppelt ist, so dass an der ersten Großnetbasisstation mit festem Standort erzeugte Kommunikationssignale, die auf der Großnetzfunkverbindung kommuniziert und an dem ersten Großnetztransceivermittel empfangen werden, an das erste lokale Netztransceivermittel leitweggelenkt bzw. geroutet werden, um auf der lokalen Funkverbindung an die Mobilstation kommuniziert zu werden.

3. System nach Anspruch 2, wobei an der Mobilstation erzeugte und auf der lokalen Funkverbindung an das erste lokale Funknetztransceivermittel kommunizierte Kommunikationssignale an das erste Großnetztransceivermittel geroutet werden, um auf der Großnetzfunkverbindung an die Großnetzbasisstation mit festem Standort kommuniziert zu werden.

4. System nach Anspruch 2, wobei jedes Großnetztransceivermittel eine Gestellrahmenanordnung mit zumindest einem Erweiterungseinschub umfasst, an dem kartenmontierte Schaltungsanordnungen anschließbar sind, um danach einen Abschnitt der Gestellrahmenanordnung zu bilden, und wobei jedes lokale Funknetztransceivermittel eine lokale Netzkarte umfasst, die an den Erweiterungseinschub anschließbar ist.

5. System nach Anspruch 1, wobei die ersten und zweiten lokalen Funknetztransceivermittel ferner umfassen: Mittel, die auswählbar auf einer ersten lokalen Funkverbindung Kommunikationssignale an die Mobilstation senden bzw. von ihr empfangen, und
Mittel, die auswählbar auf einer zweiten lokalen Funkverbindung Kommunikationssignale an die Mobilstation senden bzw. von ihr empfangen.

6. System nach Anspruch 5, wobei ein Bereich (42) innerhalb der ausgewählten Reichweite des ersten lokalen Funknetztransceivermittels einen ersten Zellenbereich begrenzt bzw. definiert, innerhalb dessen die Mobilstation fähig ist, die Kommunikationssignale an das erste lokale Funknetztransceivermittel zu senden bzw. von diesem zu empfangen, und wobei ein Bereich innerhalb der ausgewählten Reichweite des zweiten lokalen Funknetztransceivermittels einen zweiten Zellenbereich (42) definiert, innerhalb dessen die Mobilstation fähig ist, die Kommunikationssignale an das zweite lokale Funknetztransceivermittel zu senden bzw. von diesem zu empfangen

7. System Anspruch 6, wobei der erste Zellenbereich und der zweite Zellenbereich sich zumindest teilweise überlappen und wobei die Auswahl der Kommunikation zwischen der Mobilstation und eines der ersten und zweiten lokalen Funknetztransceivermittel auf zumindest einem Kommunikationsparameter basiert.

8. System nach Anspruch 7, wobei der zumindest eine Kommunikationsparameter einen Signalqualitätsparameter umfasst.

9. System nach Anspruch 7, wobei der zumindest eine Kommunikationsparameter einen Systemlast-bezogenen Parameter umfasst.

10. System nach Anspruch 6, wobei der Mobilstation zumindest die Bewegung zwischen dem ersten Zellenbereich und dem zweiten Zellenbereich gestattet ist und wobei die Kommunikationsweiterreichungen (Handoffs) ansprechend auf die Bewegung der Mobilstation zwischen dem ersten Zellenbereich und dem zweiten Zellenbereich zwischen dem ersten lokalen Funknetztransceivermittel und dem zweiten lokalen Funknetztransceivermittel durchgeführt werden.

11. System nach Anspruch 10, wobei das stationäre drahtlose Zugangskommunikationssystem ferner eine Routing-Abbildung bzw. einen Leitwegplan (52) umfasst, der mit der ersten Großnetzbasisstation mit festem Standort gekoppelt ist, wobei die Routing-Abbildung eine Angabe der Position der Mobilstation in dem ersten Zellenbereich, dem zweiten Zellenbereich oder beiden enthält.

12. System nach Anspruch 11, wobei die erste Großnetzbasisstation mit festem Standort mit einem Zugangsprozessor (28) verbunden ist und wobei die Routing-Abbildung sich auf dem Zugangsprozessor befindet.

13. System nach Anspruch 12, wobei die Angabe der Position der Mobilstation ansprechend auf Standortänderungen der Mobilstation aktualisiert wird.

14. System nach Anspruch 12, wobei das Routen von Kommunikationssignalen an die Mobilstation ansprechend auf Werte für die daselbst enthaltene Angabe ausgewählt wird.

15. System nach Anspruch 14, wobei nicht zugestellte Kommunikationssignale anschließend an die Aktualisierung des daselbst enthaltenen Werts der Angabe und ansprechend auf die Weiterreichung von Kommunikationen zwischen dem ersten lokalen Funknetztransceivermittel und dem zweiten lokalen Funknetztransceivermittel entsprechend dem aktualisierten Wert der Angabe neu geroutet werden.

16. Verfahren zum Kommunizieren in einem stationären drahtlosen Zugangskommunikationssystem (10) mit einer Großnetzbasisstation (12) mit festem Standort, einer ersten Großnetzteilnehmerstation (14) mit festem Standort, die fähig ist, mit der Großnetzbasisstation mit festem Standort zu kommunizieren, einer zweiten Großnetzteilnehmerstation (14) mit festem Standort, die fähig ist, mit der Großnetzbasisstation mit festem Standort zu kommunizieren, und einer Mobilstation, und wobei die Mobilstation sich zwischen Abdeckungsbereichen bewegt, die durch eine ausgewählte Reichweite des ersten lokalen Funknetztransceivers und durch eine ausgewählte Reichweite des zweiten lokalen Funknetztranseivers definiert sind, wobei das Verfahren umfasst:
auswählbares Senden bzw. Empfangen von Kommunikationssignalen für Kommunikationen zwischen der Großnetzbasisstation mit festem Standort und der Mobilstation unter Verwendung einer ersten Funkverbindung (46), die zwischen der Mobilstation und einem ersten lokalen Funknetztransceiver aufgebaut wird, der an der ersten Großnetzteilnehmerstation mit festem Standort positioniert ist, wenn die Mobilstation innerhalb der ausgewählten Reichweite der ersten Großnetzteilnehmerstation mit festem Standort, aber außerhalb der ausgewählten Reichweite der zweiten Großnetzteilnehmerstation mit festem Standort positioniert ist;
auswählbares Senden bzw. Empfangen von Kommunikationssignalen für Kommunikationen zwischen der Großnetzbasisstation mit festem Standort und der Mobilstation unter Verwendung einer zweiten Funkverbindung (46), die zwischen der Mobilstation und einem zweiten lokalen Funknetztransceiver aufgebaut wird, der an der zweiten Großnetzteilnehmerstation mit festem Standort positioniert ist, wenn die Mobilstation innerhalb der ausgewählten Reichweite der zweiten Großnetzteilnehmerstation mit festem Standort, aber außerhalb der ausgewählten Reichweite der ersten Großnetzteilnehmerstation mit festem Standort positioniert ist;
auswählbares Senden bzw. Empfangen von Kommunikationssignalen zwischen der Großnetzbasisstation mit festem Standort und der Mobilstation unter Verwendung einer ausgewählten der ersten und zweiten Funkverbindungen (46), wenn die Mobilstation innerhalb der ausgewählten Reichweiten sowohl der ersten als auch der zweiten Großnetzteilnehmerstation mit festem Standort positioniert ist; und
auswählbares Senden bzw. Empfangen von Kommunikationssignalen zwischen der Großnetzbasisstation mit festem Standort und der Mobilstation unter Verwendung der zweiten Funkverbindung (46), wenn die Mobilstation sich außerhalb der ausgewählten Reichweite innerhalb der ausgewählten Reichweiten sowohl der ersten Großnetzteilnehmerstation mit festem Standort, aber innerhalb der ausgewählten Reichweite der zweiten Großnetzteilnehmerstation mit festem Standort bewegt;
Weiterreichen (Handoff) von Kommunikationen mit der Mobilstation zwischen dem ersten lokalen Funknetztransceiver und dem zweiten lokalen Funknetztransceiver, wenn sich die Mobilstation zwischen den Abdeckungsbereichen bewegt.

17. Verfahren nach Anspruch 16, wobei die ersten und zweiten Großnetzteilnehmerstationen mit festem Standort jeweils einen Großnetzfunktransceiver (38) umfassen, der daselbst positioniert ist, um Kommunikationssignale auf einer Großnetzfunkverbindung (16) an die Großnetzbasisstation mit festem Standort zu senden bzw. von ihr zu empfangen, wobei die ersten und zweiten lokalen Funknetztransceiver jeweils mit dem Großnetzfunktransceiver gekoppelt sind, der an der jeweiligen ersten oder zweiten Großnetzteilnehmerstation mit festem Standort positioniert ist, so dass an der Großnetbasisstation mit festem Standort erzeugte Kommunikationssignale, die auf der Großnetzfunkverbindung kommuniziert und an dem ersten Großnetzfunktransceiver empfangen werden, an den ersten lokalen Funknetztransceiver geroutet werden, um auf der ersten lokalen Funkverbindung an die Mobilstation kommuniziert zu werden.

18. Verfahren nach Anspruch 16, das ferner umfasst:
Pflegen einer Routing-Abbildung (52), die angibt, in welchem Abdeckungsbereich die Mobilstation positioniert ist.

## Revendications

1. Système (10) pour faciliter la communication radio avec une station mobile (44) dans un système de communication à accès sans fil fixe comprenant au moins une première station de base (12) à site fixe à réseau étendu et au moins des première et seconde stations d'abonné (14) à site fixe à réseau étendu, chacune capable de communiquer avec la première station de base à site fixe à réseau étendu, le système comprenant :
un premier et un second moyen émetteur-récepteur radio à réseau local (38) positionnés respectivement à chacune des au moins première et seconde stations d'abonné à site fixe à réseau étendu pour effectuer l'émission-réception sélective de signaux de communication pour des communications entre la première station de base à site fixe à réseau étendu et la station mobile lors d'une liaison radio locale (46) formée entre le moyen émetteur-récepteur respectif à réseau local et la station mobile,
système dans lequel le premier moyen émetteur-récepteur radio à réseau local à la première station d'abonné à site fixe à réseau étendu est conçu pour former la liaison radio locale avec la station mobile lorsque la station mobile est positionnée dans une plage sélectionnée de la première station d'abonné à site fixe à réseau étendu et est conçu pour opérer un transfert au second moyen émetteur-récepteur à réseau local au niveau de la seconde station d'abonné à site fixe à réseau étendu lorsque la station mobile se déplace hors de la plage sélectionnée de la première station d'abonné à site fixe à réseau étendu mais à l'intérieur de la plage sélectionnée de la seconde station d'abonné à site fixe à réseau étendu, et
dans lequel le premier moyen émetteur-récepteur radio à réseau local est conçu pour former la liaison radio locale avec la station mobile lorsque la station mobile est positionnée à l'intérieur de la plage sélectionnée de la première station d'abonné à site fixe à réseau étendu mais à l'extérieur de la plage sélectionnée de la seconde station d'abonné à site fixe à réseau étendu, dans lequel le second moyen radio à réseau local est conçu pour former une liaison radio locale avec la station mobile lorsque la station mobile est positionnée à l'intérieur de la plage sélectionnée de la seconde station d'abonné à site fixe à réseau étendu mais à l'extérieur de la plage sélectionnée de la première station d'abonné à site fixe à réseau étendu, et dans lequel l'un sélectionné du premier et du second moyen émetteur-récepteur radio à réseau local est conçu pour former une liaison radio locale avec la station mobile lorsque la station mobile est positionnée à l'intérieur de la plage sélectionnée des deux première et seconde stations d'abonné à site fixe à réseau étendu.

2. Système (10) selon la revendication 1, dans lequel la première station d'abonné à site fixe à réseau étendu comprend un premier moyen émetteur-récepteur (28) à réseau étendu positionné à ladite station et dans lequel la seconde station d'abonné à site fixe à réseau étendu comprend un second moyen émetteur-récepteur (28) à réseau étendu positionné à ladite station, chacun des premier et second moyens émetteur-récepteur à réseau étendu étant conçu pour l'émission-réception de signaux de communication lors d'une liaison radio (16) de longue portée avec la station de base à site fixe, et dans lequel chaque moyen émetteur-récepteur à réseau local est couplé au moyen émetteur-récepteur à réseau étendu à la première ou seconde station d'abonné à site fixe respective de telle façon que des signaux de communication générés à la première station de base à site fixe à réseau étendu, communiqués lors de la liaison radio de longue portée et reçus au niveau du premier moyen émetteur-récepteur à réseau étendu, soient acheminés au premier moyen émetteur-récepteur à réseau local pour être communiqués à la station mobile lors de la liaison radio locale.

3. Système selon la revendication 2, dans lequel des signaux de communication générés à la station mobile et communiqués lors de la liaison radio locale au premier moyen émetteur-récepteur radio à réseau local sont acheminés au premier moyen émetteur-récepteur à réseau étendu pour être communiqués lors de la liaison radio étendue à la station de base à site fixe à réseau étendu.

4. Système selon la revendication 2, dans lequel chaque moyen émetteur-récepteur à réseau étendu comprend un ensemble rack ayant au moins un connecteur d'extension auquel est connectable un circuit monté sur cartes de circuits imprimés, pour former ensuite une partie de l'ensemble rack, et dans lequel chaque moyen émetteur-récepteur à réseau local comprend une carte de réseau local connectable au connecteur d'extension.

5. Système selon la revendication 1, dans lequel le premier et le second moyen émetteur-récepteur radio à réseau local comprend, en outre, des moyens pour émettre/recevoir de manière sélective des signaux de communication avec la station mobile lors d'une première liaison radio locale et
des moyens pour émettre/recevoir de manière sélective des signaux de communication avec la station mobile lors d'une seconde liaison radio locale.

6. Système selon la revendication 5, dans lequel une région (42) à l'intérieur de la plage sélectionnée du premier moyen émetteur-récepteur radio à réseau local définit une première zone cellulaire à l'intérieur de laquelle la station mobile est capable d'émettre/recevoir les signaux de communication avec le premier moyen émetteur-récepteur radio à réseau local, et dans lequel une région à l'intérieur de la plage sélectionnée du second moyen émetteur-récepteur radio à réseau local définit une seconde zone cellulaire (42) à l'intérieur de laquelle la station mobile est capable d'émettre/recevoir les signaux de communication avec le second moyen émetteur-récepteur radio à réseau local.

7. Système selon la revendication 6, dans lequel la première zone cellulaire et la seconde zone cellulaire se chevauchent au moins partiellement et dans lequel une sélection de communication entre la station mobile et l'un des premier et second moyens émetteurs-récepteurs radio à réseau local est basée sur au moins un paramètre de communication.

8. Système selon la revendication 7, dans lequel le au moins un paramètre de communication comprend un paramètre de qualité de signal.

9. Système selon la revendication 7, dans lequel le au moins un paramètre de communication comprend un paramètre lié à la charge système.

10. Système selon la revendication 6, dans lequel la station mobile est autorisée à se déplacer au moins entre la première zone cellulaire et la seconde zone cellulaire et dans lequel des transferts de communications sont réalisés entre le premier moyen émetteur-récepteur radio à réseau local et ledit second moyen émetteur-récepteur radio à réseau local en réponse au déplacement de la station mobile entre la première zone cellulaire et la seconde zone cellulaire.

11. Système selon la revendication 10, dans lequel le système de communication à accès sans fil fixe comprend, en outre, une carte de routage (52) couplée à la première station de base à site fixe à réseau étendu, la carte de routage contenant une indication de la position de la station mobile dans la première zone cellulaire, la seconde zone cellulaire, ou les deux.

12. Système selon la revendication 11, dans lequel la première station de base à site fixe à réseau étendu est reliée à un processeur d'accès et dans lequel la carte de routage est localisée au niveau du processeur d'accès.

13. Système selon la revendication 12, dans lequel l'indication de la position de la station mobile est actualisée en réponse à des modifications de la position de la station mobile.

14. Système selon la revendication 12, dans lequel l'acheminement de signaux de communication à la station mobile est choisi en réponse à des valeurs de l'indication qui y est contenue.

15. Système selon la revendication 14, dans lequel, après actualisation de la valeur de l'indication contenue dans ladite station mobile, et en réponse au transfert de communications entre le premier moyen émetteur-récepteur radio à réseau local et le second moyen émetteur-récepteur radio à réseau local, des signaux de communication non délivrés sont réacheminés en fonction de la valeur actualisée de l'indication.

16. Procédé pour communiquer dans un système de communication (10) à accès sans fil fixe (FWA) doté d'une station de base (12) à site fixe à réseau étendu, une première station d'abonné (14) à site fixe à réseau étendu capable de communiquer avec la station de base à site fixe à réseau étendu, une seconde station d'abonné (14) à site fixe à réseau étendu capable de communiquer avec la station de base à site fixe à réseau étendu, et une station mobile (14), la station mobile se déplaçant entre des zones de couverture définies par une plage sélectionnée du premier émetteur-récepteur radio à réseau local et par une plage sélectionnée du second émetteur-récepteur radio à réseau local, ledit procédé comprenant les étapes suivantes :
- émission-réception sélective de signaux de communication pour des communications entre la station de base à site fixe à réseau étendu et la station mobile au moyen d'une première liaison radio (46) réalisée entre la station mobile et un premier émetteur-récepteur radio à réseau local positionné à la première station d'abonné à site fixe à réseau étendu lorsque la station mobile est positionnée à l'intérieur de la plage sélectionnée de la première station d'abonné à site fixe à réseau étendu mais à l'extérieur de la plage sélectionnée de la seconde station d'abonné à site fixe à réseau étendu ;
- émission-réception sélective de signaux de communication pour des communications entre la station de base à site fixe à réseau étendu et la station mobile au moyen d'une seconde liaison radio (46) réalisée entre la station mobile et un second émetteur-récepteur radio à réseau local positionné à la seconde station d'abonné à site fixe à réseau étendu lorsque la station mobile est positionnée à l'intérieur de la plage sélectionnée de la seconde station d'abonné à site fixe à réseau étendu mais à l'extérieur de la plage sélectionnée de la première station d'abonné à site fixe à réseau étendu ;
- émission-réception sélective de signaux de communication entre la station de base à site fixe à réseau étendu et la station mobile au moyen de l'une sélectionnée de la première et de la seconde liaison radio (46) lorsque la station mobile est positionnée à l'intérieur des plages sélectionnées des deux première et seconde stations d'abonné à site fixe à réseau étendu ;
- émission-réception sélective de signaux de communication entre la station de base à site fixe à réseau étendu et la station mobile au moyen de la seconde liaison radio (46) lorsque la station mobile se déplace à l'extérieur de la plage sélectionnée de la première station d'abonné à site fixe à réseau étendu mais à l'intérieur de la plage sélectionnée de la seconde station d'abonné à site fixe à réseau étendu ; et
- transfert de communications avec la station mobile entre le premier émetteur-récepteur radio à réseau local et le second émetteur-récepteur radio à réseau local lorsque la station mobile se déplace entre les zones de couverture.

17. Procédé selon la revendication 16, dans lequel chacune des première et seconde stations d'abonné à site fixe comprend un émetteur-récepteur radio à réseau étendu (38) positionné auxdites stations pour l'émission-réception de signaux de communication lors d'une liaison radio de longue portée (16) avec la station de base à site fixe à réseau étendu, et dans lequel chacun des premier et second émetteurs-récepteurs radio à réseau local est couplé à l'émetteur-récepteur radio à réseau étendu positionné à la première ou seconde station d'abonné à site fixe à réseau étendu de telle façon que des signaux de communication générés à la station de base à site fixe à réseau étendu, communiqués lors de la liaison radio de longue portée et reçus à l'émetteur-récepteur radio à réseau étendu, sont acheminés au premier émetteur-récepteur radio à réseau local pour être communiqués à la station mobile lors de la première liaison radio locale.

18. Procédé selon la revendication 16, consistant, en outre :
à mettre à jour une carte de routage (62) indiquant dans quelle zone de couverture est positionnée la station mobile.
